# FASCICULE DE BREVET EUROPEEN

(11) **EP 0 783 261 B1**
(45) Date de publication et mention de la délivrance du brevet: **15.04.1998**
(21) Numéro de dépôt: 95934166.0
(22) Date de dépôt: 27.09.1995
(51) Int. Cl.: A47J 31/44

(54) **CAFETIERE COMPORTANT UN DISPOSITIF DE SELECTION DU MODE D'ARROSAGE DE LA POUDRE DE CAFE**
KAFFEEMASCHINE MIT EINER VORRICHTUNG ZUM AUSWÄHLEN EINER SPRÜHWEISE
COFFEE MACHINE COMPRISING A DEVICE FOR SELECTING THE MODE OF WATERING THE COFFEE POWDER

(30) Priorité: 30.09.1994 FR 9411760
(43) Date de publication de la demande: 16.07.1997
(73) Titulaire: MOULINEX S.A., 75008 Paris (FR)
(72) Inventeur: JOUATEL, Christian, Bernard, F-61250 Radon (FR); LANDAIS, Francis Pierre Jacques, décédé (FR)
(74) Mandataire: Busquets, Jean-Pierre
(86) Numéro de dépôt international: FR9501242
(87) Numéro de publication internationale: WO9610355

(56) Documents cités:
- EP-A- 0 111 969
- EP-A- 0 616 785
- DE-A- 2 751 310
- DE-A- 3 634 339
- FR-A- 2 625 893
- US-A- 4 328 740

## Description

La présente invention se rapporte aux cafetières ménagères comprenant, dans un boîtier, un réservoir d'eau froide, un chauffe-eau, alimenté par ce réservoir et alimentant lui-même par un tube d'eau chaude une goulotte d'arrosage ayant un couvercle, une base présentant un orifice central et une série d'orifices périphériques destinés à arroser selon au moins deux modes d'arrosage la poudre de café contenue dans un filtre placé en position de travail, ladite goulotte comportant en outre un palier dans lequel est monté mobile verticalement un moyen d'obturation dont le déplacement est commandé par un bilame de manière à occuper au moins deux positions extrêmes soit une position d'obturation pendant une période dite d'obturation pour laquelle l'écoulement de l'eau chaude se fait uniquement par la série d'orifices périphériques, soit une position d'ouverture pour laquelle l'écoulement de l'eau chaude se fait principalement par l'orifice central.

Les cafetières comportant un dispositif d'arrosage de la poudre de café selon deux modes sont connues et ont été décrites notamment dans la Demande FR 2 625 893 déposée le 14 Janvier 1988 par la Demanderesse. Dans cette demande antérieure, la Demanderesse décrit une cafetière comportant une goulotte munie d'un dispositif d'arrosage de la poudre de café en deux périodes, une première période durant laquelle la poudre de café est arrosée uniquement par les orifices périphériques tandis que l'orifice central demeure obturé pendant une durée préalablement fixée, et une deuxième période durant laquelle la poudre de café est arrosée par l'orifice central.

Ce dispositif permet d'extraire le maximum d'arôme de la poudre de café mais ne permet cependant pas à l'utilisateur d'effectuer par un réglage extérieur le choix d'un mode d'arrosage particulier en fonction de la force de l'infusion de café souhaitée et du type de mouture du café utilisé.

La présente invention a pour but de remédier à cet inconvénient en apportant un perfectionnement notable au dispositif d'arrosage décrit.

Selon l'invention, la goulotte d'arrosage comporte sur sa base au moins une plage intermédiaire qui est agencée entre l'orifice central et la série d'orifices périphériques et dans laquelle est pratiquée une série d'orifices intermédiaires destinés également à arroser la poudre de café et susceptibles d'être bouchés pendant ladite période d'obturation par un moyen de fermeture solidaire dudit moyen d'obturation, et le moyen d'obturation est associé à un moyen mobile de butée destiné à contrôler la course dudit moyen d'obturation dans le palier de manière à faire occuper au moyen de fermeture au moins une position intermédiaire entre ladite position d'obturation et ladite position d'ouverture et en laquelle l'écoulement de l'eau chaude se fait par ladite série d'orifices intermédiaires tout en maintenant obturé l'orifice central.

Grâce à la goulotte selon l'invention, l'utilisateur peut choisir la force de café qu'il souhaite confectionner en sélectionnant un mode d'arrosage particulier de la poudre de café parmi plusieurs modes d'arrosages différents produisant chacun un café de force déterminée.

Les caractéristiques et avantages de l'invention ressortiront de la description qui va suivre, à titre d'exemples non limitatifs, en référence aux dessins annexés dans lesquels:
la figure 1 représente schématiquement et, partiellement en élévation et partiellement en coupe une cafetière équipée d'une goulotte d'arrosage selon l'invention.
La figure 2 est une vue schématique et agrandie illustrant la goulotte d'arrosage de la figure 1 avec un moyen i'obturation en position d'obturation.
La figure 3 est une vue similaire à la figure 2 mais avec le moyen d'obturation en position intermédiaire.
La figure 4 est une vue similaire à la figure 2 mais avec le moyen d'obturation en position d'ouverture.
la figure 5 représente en vue éclatée et en coupe verticale une goulotte selon un mode préféré de réalisation de l'invention.

La cafetière décrite comprend, dans un boîtier 2, un réservoir d'eau froide 4, un chauffe-eau 6 alimenté par ce réservoir et alimentant lui-même par un tube 8 d'eau chaude une goulotte d'arrosage 10 ayant un couvercle 11;60, une base 12;94 présentant un orifice central 14;95 et une série d'orifices périphériques 16;96 destinés à arroser selon au moins deux modes d'arrosage la poudre de café 18 contenue dans un filtre 20 placé en position de travail, ladite goulotte 10 comportant en outre un palier 22;66 dans lequel est monté mobile verticalement un moyen d'obturation 24;68 dont le déplacement est commandé par un bilame 26;69 de manière à occuper au moins deux positions extrêmes soit une position d'obturation pendant une période dite d'obturation pour laquelle l'écoulement de l'eau chaude se fait uniquement par la série d'orifices périphériques 16;96, soit une position d'ouverture pour laquelle l'écoulement de l'eau chaude se fait principalement par l'orifice central 14;95.

Selon l'invention, la goulotte d'arrosage 10 comporte sur sa base 12;94 au moins une plage intermédiaire 28;98 qui est agencée entre l'orifice central 14;95 et la série d'orifices périphériques 16;96 et dans laquelle est pratiquée une série d'orifices intermédiaires 30;99 destinés également à arroser la poudre de café 18 et susceptibles d'être bouchés pendant ladite période d'obturation par un moyen de fermeture 32;92 solidaire dudit moyen d'obturation 24;68, et le moyen d'obturation 24;68 est associé à un moyen mobile de butée 34;74 destiné à contrôler la course dudit moyen d'obturation 24;68 dans le palier 22;66 de manière à faire occuper au moyen de fermeture 32;92 au moins une position intermédiaire entre ladite position d'obturation et ladite position d'ouverture et en laquelle l'écoulement de l'eau chaude se fait par ladite série d'orifices intermédiaires 30;99 tout en maintenant obturé l'orifice central 14;95.

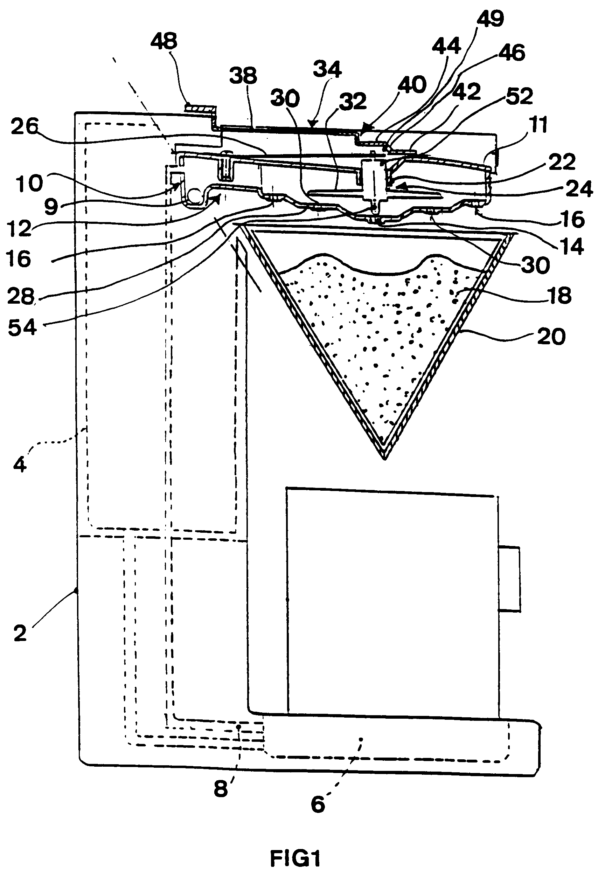

Comme représenté sur les figures 1 à 5, la base 12;94 de la goulotte 10 comporte une structure étagée formée de plusieurs plages agencées symétriquement autour de l'orifice central 14;95, et ledit moyen de fermeture 32;92 est formé par une jupe plane adaptée à obturer les orifices intermédiaires 30;99 pendant ladite période d'obturation.

La structure de la base 12 de la goulotte 10 permet au moyen d'obturation 24;68 et au moyen de fermeture 32;92 d'occuper pendant la période d'obturation, dans le palier 22;66, des positions permettant de boucher simultanément l'orifice central 14;95 et la série d'orifices intermédiaires 30;99. En outre, au moment de l'arrivée de l'eau chaude dans la goulotte 10 le déplacement vertical vers le haut du moyen d'obturation 24;68 et du moyen de fermeture 32;92, consécutivement à la déformation du bilame 26;69, provoque d'abord, l'ouverture de la série d'orifices intermédiaires 30;99 et, ensuite, celle de l'orifice central 14;95. Ces ouvertures se font de manière progressive et peuvent être modulées par le moyen mobile de butée 34;74 qui permet à l'utilisateur de contrôler la course du moyen d'obturation 24;68 dans le palier 22;66. Il en résulte la création d'un espace périphérique 58 entre le moyen de fermeture 32;92 et la plage intermédiaire 28;98.

Selon un premier mode de réalisation représenté aux figures 1 à 4, le moyen de butée 34 comporte un levier 38 dont une extrémité 40 présente une marche inférieure 42, une marche supérieure 44 et au moins une marche intermédiaire 46 destinées à limiter la course verticale du moyen d'obturation 24 de manière que ce dernier occupe respectivement dans le palier 22 la position d'obturation, la position d'ouverture et au moins une position intermédiaire entre ces deux positions extrêmes, tandis qu'une autre extrémité 48 dudit levier 38 est susceptible d'occuper sur le boîtier 2 plusieurs positions différentes corrélées avec la course du moyen d'obturation 24 et repérées par des symboles relatifs à la force de café souhaitée.

Afin de moduler l'ouverture des orifices pratiqués dans la base 12 de la goulotte 10, la marche 46 du moyen de butée 34 comporte une surface 49 à profil incliné. En effet, cette ouverture sera plus ou moins importante selon la position, sur ladite surface 49, du point d'appui du moyen de butée 34 sur le moyen d'obturation 24. Ledit moyen d'obturation 24;68 comporte un corps central 52;84 présentant en une extrémité un bossage 54;86 susceptible de s'insérer hermétiquement dans l'orifice central 14;95 et en son autre extrémité un crochet 56;88 de liaison avec une extrémité du bilame 26;69.

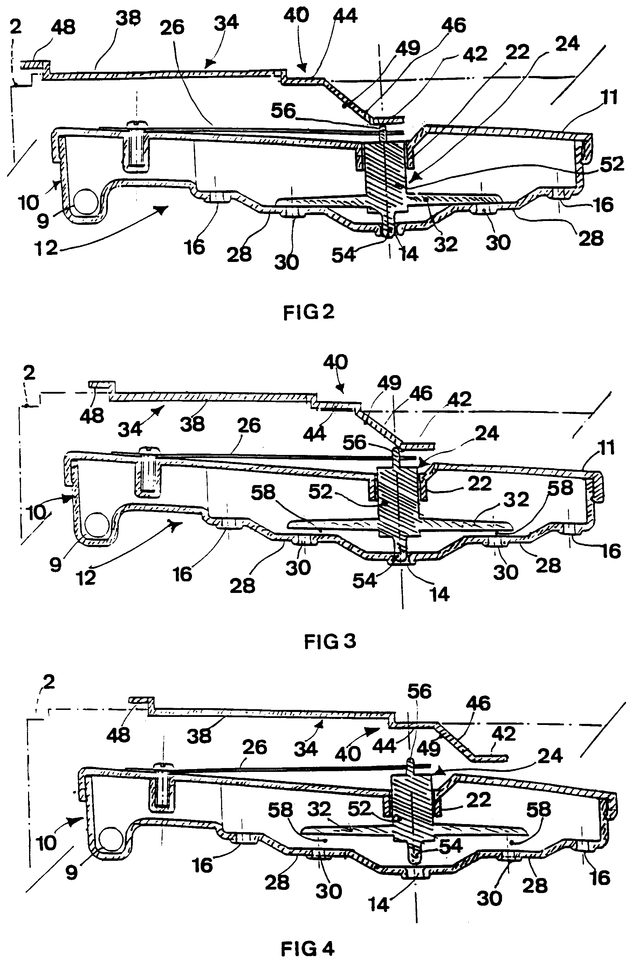

Comme cela est connu, lors de la phase initiale du fonctionnement de la cafetière, l'eau froide introduite dans le réservoir 4 subit un réchauffement dans le chauffe-eau 6. Lorsque l'eau est suffisamment chaude elle monte par le tube 8 pour arriver par un ajutage 9 dans la goulotte d'arrosage 10. Sous l'influence de l'eau chaude, le bilame 26 se déforme et provoque le déplacement progressif vers le haut du moyen d'obturation 24. Ce dernier occupant initialement dans le palier 22 la position d'obturation représentée à la figure 2 et dans laquelle le bossage 54 est hermétiquement inséré dans l'orifice central 14 de manière à en assurer l'obturation.

Parallèlement, le moyen de fermeture 32 est hermétiquement appliqué sur les orifices intermédiaires 30, pratiqués dans la plage intermédiaire 28, assurant également leur obturation.

Avec le dispositif décrit, si l'utilisateur souhaite confectionner un café léger, il positionne la marche inférieure 42 sur le moyen d'obturation 24 de manière à en interdire le déplacement vertical vers le haut, provoqué par la déformation du bilame 26. Dans cette position seuls les orifices périphériques 16 sont ouverts permettant ainsi un arrosage périphérique de la poudre de café. Il en résulte un café de faible force. Si au contraire l'utilisateur souhaite obtenir un café fort, il positionne la marche supérieure 44 au dessus du moyen d'obturation 24 de manière à en autoriser la course maximale vers le haut. Dans cette position tous les orifices pratiqués dans la base 12 de la goulotte 10 sont ouverts. La poudre de café est alors arrosée sur toute sa masse. Il en résulte un café fort.
Entre ces deux positions extrêmes (figure 3), l'utilisateur peut sélectionner plusieurs positions intermédiaires du moyen d'obturation 24 dans le palier 22, pendant une période dite intermédiaire, correspondant chacune à un mode d'arrosage particulier pour obtenir un café de force intermédiaire.
Dans ces positions intermédiaires l'orifice central 14 est obturé par le bossage 54 et l'arrosage de la poudre de café se fait essentiellement par la série d'orifices intermédiaires 30. Comme cela a été expliqué précédemment, grâce à la surface 49 à profil incliné, le moyen de butée 34 permet d'effectuer plusieurs réglages intermédiaires correspondant à plusieurs positions du moyen d'obturation 24 dans le palier 22. En effet en déplaçant la surface 49 sur le moyen d'obturation 24, l'utilisateur modifie de manière progressive et indexée la position du point d'appui de cette surface sur le moyen d'obturation 24 et partant la position de ce dernier dans le palier 22 ainsi que celle du moyen de fermeture 32 au dessus de la plage intermédiaire 28.
Il en résulte que, pendant la phase intermédiaire le débit d'écoulement de l'eau par les orifices intermédiaires 30 est fonction de l'espace périphérique 58 ménagé entre la jupe 32 et la plage intermédiaire 28.

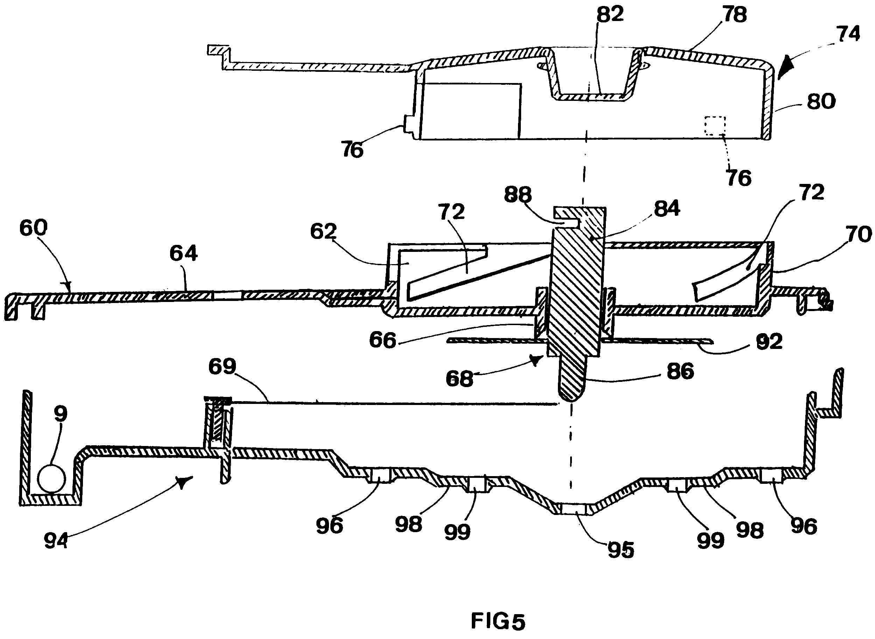

Selon un second mode de réalisation préféré de l'invention représenté sur la figure 5 le couvercle 60 de la goulotte 10 comporte une cavité 62 pratiquée sur sa face supérieure 64 et traversée par le palier 66 dans lequel se déplace le moyen d'obturation 84, ladite cavité 62 étant limitée latéralement par une paroi rigide 70 comportant des rampes hélicoïdales 72, et le moyen mobile de butée 74 est monté rotatif dans ladite cavité et comporte des ergots 76 destinés à venir en prise avec les rampes hélicoïdales 72 de manière à obtenir par un mouvement de rotation le réglage en hauteur de la course du moyen d'obturation 84. Ledit moyen de butée 74 présente la forme générale d'un chapeau et comporte une surface 78 limitée latéralement par une bordure 80 portant lesdits ergots 76, un plan 82 pratiqué en saillie sur la surface 78 et adapté à venir en appui sur le moyen d'obturation 84 afin de limiter son déplacement vertical vers le haut.

Ainsi, le moyen de butée 74, une fois fixé sur le couvercle 60 de la goulotte 10, peut occuper des positions plus ou moins hautes dans la cavité 62. Et par conséquent, selon la force de café désirée, l'utilisateur limitera la course verticale du moyen d'obturation 84 en positionnant le moyen de butée 74 à des hauteurs différentes dans la cavité 62. Chaque position sélectionnée correspond à un mode d'arrosage déterminé procurant un café de force déterminée. Grâce à la goulotte selon l'invention, l'utilisateur peut sélectionner très simplement plusieurs modes d'arrosage différents permettant d'obtenir des infusions de café de forces différentes.

## Revendications

1. Cafetière ménagère comprenant, dans un boîtier (2), un réservoir d'eau froide (4), un chauffe-eau (6) alimenté par ce réservoir et alimentant lui-même par un tube (8) d'eau chaude une goulotte d'arrosage (10) ayant un couvercle (11;60), une base (12;94) présentant un orifice central (14;95) et une série d'orifices périphériques (16;96) destinés à arroser selon au moins deux modes d'arrosage la poudre de café (18) contenue dans un filtre (20) placé en position de travail, ladite goulotte (10) comportant en outre un palier (22;66) dans lequel est monté mobile verticalement un moyen d'obturation (24;68) dont le déplacement est commandé par un bilame (26;69) de manière à occuper au moins deux positions extrêmes soit une position d'obturation pendant une période dite d'obturation pour laquelle l'écoulement de l'eau chaude se fait uniquement par la série d'orifices périphériques (16;96), soit une position d'ouverture pour laquelle l'écoulement de l'eau chaude se fait principalement par l'orifice central (14, 95),
**caractérisée on ce que** la goulotte d'arrosage (10) comporte sur sa base (12;94) au moins une plage intermédiaire (28;98) qui est agencée entre l'orifice central (14;95) et la série d'orifices périphériques (16;96) et dans laquelle est pratiquée une série d'orifices intermédiaires (30;99) destinés également à arroser la poudre de café (18) et susceptibles d'être bouchés pendant ladite période d'obturation par un moyen de fermeture (32;92) solidaire dudit moyen d'obturation (24;68), et le moyen d'obturation (24;68) est associé à un moyen mobile de butée (34;74) destiné à contrôler la course dudit moyen d'obturation (24;68) dans le palier (22;66) de manière à faire occuper au moyen de fermeture (32;92) au moins une position intermédiaire entre ladite position d'obturation et ladite position d'ouverture et en laquelle l'écoulement de l'eau chaude se fait par ladite série d'orifices intermédiaires (30;99) tout en maintenant obturé l'orifice central (14;95).

2. Cafetière ménagère selon la revendication 1,
**caractérisée en ce que** le moyen de butée (34) comporte un levier (38) dont une extrémité (40) comporte une marche inférieure (42), une marche supérieure (44) et au moins une marche intermédiaire (46) destinées à limiter la course verticale du moyen d'obturation (24) de manière que ce dernier occupe, dans le palier (22), respectivement la position d'obturation, la position d'ouverture et au moins une position intermédiaire entre ces deux positions extrêmes, tandis que l'autre extrémité (48) dudit levier (38) est susceptible d'occuper sur le boîtier (2) plusieurs positions corrélées avec la course du moyen d'obturation (24) et repérées par des symboles indiquant la force de café souhaitée.

3. Cafetière ménagère selon la revendication 2,
**caractérisée en ce que** la marche (46) comporte une surface (49) à profil incliné.

4. Cafetière ménagère selon la revendication 1,
**caractérisée en ce que** le couvercle (60) de la goulotte (10) comporte une cavité (62) pratiquée sur sa face supérieure (64) et traversée par le palier (66) dans lequel se déplace le moyen d'obturation (68), ladite cavité étant limitée latéralement par une paroi rigide (70) comportant des rampes hélicoïdales (72) et l'organe mobile de butée (74) est monté rotatif dans ladite cavité (62) et comporte des ergots (76) destinés à venir en prise avec les rampes hélicoïdales (72) de manière à obtenir par un mouvement de rotation le réglage de la course du moyen d'obturation (68).

5. Cafetière ménagère selon la revendication 4,
**caractérisée en ce que** le moyen mobile de butée (74) présente la forme générale d'un chapeau et comporte une surface (78) limitée latéralement par une bordure (80) portant lesdits ergots (76), un plan (82) pratiqué en saillie sur la surface (78) et adapté à venir en appui sur le moyen d'obturation (68) afin de limiter son déplacement vertical vers le haut.

6. Cafetière ménagère selon l'une quelconque des revendications précédentes,
**caractérisée en ce que** le moyen d'obturation (24;68) comporte un corps central (52;84) présentant en une extrémité un bossage (54;86) susceptible de s'insérer hermétiquement dans l'orifice central (14;95) et en son autre extrémité un crochet (56;88) de liaison avec une extrémité du bilame (26;69).

7. Cafetière ménagère selon la revendication 6,
**caractérisée en ce que** le moyen de fermeture (32;92) est formé par une jupe plane solidaire du moyen d'obturation (24;68) et adaptée à obturer la série d'orifices intermédiaires (30;99) pendant ladite période d'obturation.

8. Cafetière ménagère selon l'une quelconque des revendications précédentes,
**caractérisée en ce que** la base (12;94) de la goulotte 10 comporte une structure étagée formée de plusieurs plages agencées symétriquement autour de l'orifice central (14;95).

9. Cafetière ménagère selon la revendication 8,
**caractérisée en ce qu'**en la position intermédiaire, le débit de l'écoulement d'eau par la série d'orifices intermédiaires (30;99) est fonction de l'espace périphérique (58) ménagé entre la jupe plane (32;92) et la plage intermédiaire (28;98).

## Claims

1. Domestic coffee maker comprising, in a casing (2), a cold-water tank (4), a water heater (6) fed by this thank and itself feeding, through a hot-water tube (8), a sprinkling spout (10) comprising a lid (11; 60), a base (12; 94) comprising a central orifice (14; 95) and a series of peripheral orifices (16; 96) designed to sprinkle, in at least two sprinkling modes, the coffee powder (18) contained in a filter (20) placed in the operating position, the said spout (10) also comprising a bearing (22; 66) in which there is mounted so as to be vertically movable an obturation means (24; 68) whose movement is controlled by a bimetallic strip (26; 69) so as to occupy at least two extreme positions, that is to say an obturation position during a so-called obturation period in which the hot water flows solely through the series of peripheral orifices (16; 96), or an opening position in which the hot water flows mainly through the central orifice (14; 95),
**characterised in that** the sprinkling spout (10) comprises on its base (12; 94) at least one intermediate surface (28; 98) which is arranged between the central orifice (14; 95) and the series of peripheral orifices (16; 96), and in which is formed a series of intermediate orifices (30; 99) also intended to sprinkle the coffee powder (18) and able to be blocked off during the said obturation period by a closure means (32; 92) fixed to the said obturation means (24; 68), and the obturation means (24; 68) is associated with a movable stop means (34; 74) designed to control the travel of the said obturation means (24; 68) in the bearing (22; 66) so as to cause the closure means (32; 92) to occupy at least one intermediate position between the said obturation position and the said opening position and in which the hot water flows through the said series of intermediate orifices (30; 99) whist keeping the central orifice (14; 95) closed off.

2. Domestic coffee maker according to claim 1,
**characterised in that** the movable stop means (34) comprises a lever (38), one end (40) of which comprises a bottom step (42), a top step (44) and at least one intermediate step (46) designed to limit the vertical travel of the obturation means (24) so that the latter occupies, in the bearing (22), respectively the obturation position, the opening position and at least one intermediate position between these two extreme positions, whilst the other end (48) of the said lever (38) is able to occupy on the casing (2) several positions correlated with the travel of the obturation means (24) and marked by symbols indicating the desired force of coffee

3. Domestic coffee maker according to claim 2,
**characterised in that** the step (46) comprises a surface (49) an inclined profile.

4. Domestic coffee maker according to claim 1,
**characterised in that** the lid (60) on the spout (10) comprises a cavity (62) formed on its top face (64) through which passes the bearing (66) in which the obturation means (68) moves, the said cavity being delimited laterally by a rigid wall (70) comprising helical ramps (72), and the movable spot member (74) is rotatably mounted in the said cavity (62) and comprises lugs (76) designed to come into engagement with the helical ramps (72) so as to obtain, by means of a rotation movement, the adjustment of the travel of the obturation means (68).

5. Domestic coffee maker according to claim 4,
**characterised in that** the movable stop means (74) has the overall shape of a cap and comprises a surface (78) delimited laterally by an edge (80) carrying the said lugs (76), a plane (82) formed projecting on the surface (78) and adapted to come into abutment on the obturation means (68) in order to limit its upward vertical movement.

6. Domestic coffee maker according to any one of the preceding claims,
**characterised in that** the obturation means (24; 68) comprises a central body (52; 84) having at one end a protrusion (54; 86) able to be inserted hermetically in the central orifice (14; 95) and at its other end a hook (56; 88) connecting with one end of the bimetallic strip (26; 69).

7. Domestic coffee maker according to claim 6,
**characterised in that** the closure means (32; 92) is formed by a flat skirt fixed to the obturation means (24; 68) and adapted to close off the series of intermediate orifices (30; 99) during the said obturation period.

8. Domestic coffee maker according to any one of the preceding claims,
**characterised in that** the base (12; 94) of the spout (10) comprises a stepped structure formed by several levels arranged symmetrically about the central orifice (14; 95).

9. Domestic coffee maker according to claim 8,
**characterised in that** in the intermediate position the rate of flow of water through the series of intermediate orifices (30; 99) is a function of the peripheral space (58) formed between the flat skirt (32; 92) and the intermediate surface (28; 98).

## Patentansprüche

1. Haushaltskaffeemaschine, die in einem Gehäuse (2) einen Kaltwassertank (4) und einen von diesem Tank gespeisten Wassererhitzer (6) aufweist, der wiederum über ein Rohr (8) eine Begießrinne (10) mit einem Deckel (11;60) und einer Basis (12;94) speist, die eine Mittelöffnung (14;95) und eine Reihe Umfangsöffnungen (16;96) aufweist, die nach mindestens zwei Begießarten das in einem in Arbeitsstellung plazierten Filter (20) enthaltene Kaffeemehl (18) begießen, wobei die Rinne 10 außerdem ein Lager (22;66) aufweist, in welchem ein Verschließelement (24;68) vertikal beweglich montiert ist, dessen Bewegung durch ein Bimetall (26;69) gesteuert ist, so daß es mindestens zwei Extrempositionen einnehmen kann, nämlich eine Verschließstellung während einer Verschließperiode, in welcher das heiße Wasser lediglich durch die Reihe Umfangsöffnungen (16;96) fließt, und eine Öffnungsstellung, in welcher das heiße Wasser hauptsächlich durch die Mittelöffnung (14;95) fließt, **dadurch gekennzeichnet, daß** die Begießrinne (10) an ihrer Basis (12;94) mindestens einen zwischen der Mittelöffnung (14;95) und der Reihe Umfangsöffnungen (16;96) angeordneten Zwischenbereich (28;58) aufweist, in welchem eine Reihe Zwischenöffnungen (30;99) ausgebildet sind, die ebenfalls das Kaffeemehl (18) begießen und die während der Verschließphase von einem mit dem Verschließelement (24;68) fest verbundenen Schließelement (32;92) geschlossen werden können, und daß das Verschließelement (24;68) mit einem beweglichen Anschlagelement (34;74) zusammenwirkt, das die Bewegung des Verschließelements (24;68) im Lager (22;66) so steuert, daß das Schließelement (32;92) mindestens eine Zwischenstellung zwischen der Verschließstellung und der Öffnungsstellung einnimmt, in der das heiße Wasser durch die Reihe Zwischenöffnungen (30;99) fließt, wobei die Mittelöffnung (14;95) verschlossen bleibt.

2. Haushaltskaffeemaschine nach Anspruch 1, **dadurch gekennzeichnet, daß** das Anschlagelement (34) einen Hebel (38) aufweist, dessen eines Ende (40) eine untere Stufe (42) , eine obere Stufe (44) und mindestens eine Zwischenstufe (46) aufweist, die die Vertikalbewegung des Verschließelements (24) so begrenzen, daß dieses im Lager (22) jeweils die Verschließstellung, die Öffnungsstellung und mindestens eine zwischen diesen zwei extremen Positionen gelegene Zwischenstellung einnimmt, wohingegen das andere Ende (48) des Hebels (38) am Gehäuse (2) mehrere verschiedene mit der Bewegung des Verschließelements (24) zusammenhängende Stellungen einnehmen kann, die an Symbolen abgelesen werden können, die die gewünschte Stärke des Kaffees betreffen.

3. Haushaltskaffeemaschine nach Anspruch 2, **dadurch gekennzeichnet, daß** die Stufe (46) eine Fläche (49) mit geneigtem Profil aufweist.

4. Haushaltskaffeemaschine nach Anspruch 1, **dadurch gekennzeichnet, daß** der Deckel (60) der Rinne (10) eine in seiner oberen Fläche (64) ausgebildete Aushöhlung (62) aufweist, die vom Lager (66) durchsetzt ist, in welchem sich das Verschließelement (68) bewegt, wobei die Aushöhlung seitlich durch eine starre Wand (70) mit spiralförmigen Rampen (72) begrenzt ist, und daß das bewegliche Anschlagelement (74) in der Aushöhlung (62) drehbar montiert ist und Vorsprünge (76) aufweist, die an den spiralförmigen Rampen (72) so angreifen, daß durch eine Drehbewegung die Steuerung der Bewegung des Verschließelements (68) erhalten wird.

5. Haushaltskaffeemaschine nach Anspruch 4, **dadurch gekennzeichnet, daß** das bewegliche Anschlagelement (74) die allgemeine Form einer Haube hat und eine Fläche (78), die seitlich von einem die Vorsprünge (76) tragenden Rand (80) begrenzt ist, sowie eine Ebene (82) aufweist, die aus der Fläche (78) herausragend ausgebildet ist und auf das Verschließelement (68) drückt, um dessen Vertikalverschiebung nach oben zu begrenzen.

6. Haushaltskaffeemaschine nach einem der vorhergehenden Ansprüche, **dadurch gekennzeichnet, daß** das Verschließelement (24;68) einen Mittelkörper (52;84) aufweist, der an einem Ende einen Zapfen (54;86), der hermetisch in die Mittelöffnung (14;95) eingeführt werden kann, und an seinem anderen Ende einen Haken (56;88) zur Verbindung mit einem Ende des Bimetalls (26;69) aufweist.

7. Haushaltskaffeemaschine nach Anspruch 6, **dadurch gekennzeichnet, daß** das Schließelement (32;92) durch eine mit dem Verschließelement (24;68) fest verbundene ebene Schürze gebildet ist, die während der Verschließphase die Reihe Zwischenöffnungen (30;99) verschließt.

8. Haushaltskaffeemaschine nach einem der vorhergehenden Ansprüche, **dadurch gekennzeichnet, daß** die Basis (12;94) der Rinne (10) eine Stufenstruktur aufweist, die aus mehreren symmetrisch um die Mittelöffnung (14;95) angeordneten Bereichen gebildet ist.

9. Haushaltskaffeemaschine nach Anspruch 8, **dadurch gekennzeichnet, daß** in der Zwischenstellung die Menge des durch die Zwischenöffnungen (30;99) fließenden Wassers vom zwischen der ebenen Schürze (32;92) und dem Zwischenbereich (28;98) entstehenden Umfangsraum (58) abhängt.
